# EUROPÄISCHE PATENTANMELDUNG

(11) **EP 1 003 142 A1**
(43) Veröffentlichungstag der Anmeldung: **24.05.2000**
(21) Anmeldenummer: 99440315.2
(22) Anmeldetag: 16.11.1999
(51) Int. Cl.: G09B 5/14, G09B 7/04, G09B 5/06

(54) **Verfahren zur automatischen Überwachung der Erreichung von Lernzielen durch einen Rechner**

(30) Priorität: 17.11.1998 DE 19852937
(71) Anmelder: ALCATEL, 75008 Paris (FR)
(72) Erfinder: Hägebarth, Frank, 74366 Kirchheim (DE)
(74) Vertreter: Brose, Gerhard, Dipl.-Ing.

(57) **Zusammenfassung**

Um ein solches Verfahren (1) dahingehend weiterzubilden, daß die Effizienz des Lernkurses erhöht wird, schlägt die Erfindung ein Verfahren (1) mit den nachfolgenden Schritten vor:
- Auswahl von Fragen aus einer Gruppe von Fragen (2),
- Erstellung eines Kontrolltests durch Zusammenfügen der ausgewählten Fragen (5),
- Bereitstellung des Kontrolltests an den Lernenden (3) (7),
- Aufnahme der Antworten des Lernenden (3) auf die Fragen des Kontrolltests (8),
- Vergleich der Antworten mit vorgegebenen Anforderungen (9),
- Erstellung einer zusätzlichen Lerneinheit (11), falls die im geforderten Anforderungen nicht erreicht sind, und
- Bereitstellung der zusätzlichen Lerneinheit für den Lernenden (3) (12).

## Beschreibung

Die vorliegende Erfindung betrifft ein Verfahren zur automatischen Überwachung der Erreichung von Lernzielen durch einen Lernenden im Rahmen eines Lernkurses bestehend aus mindestens einer Lerneinheit mittels eines Rechners

Die vorliegende Erfindung betrifft außerdem einen Rechner zur automatischen Überwachung der Erreichung von Lernzielen durch einen Lernenden im Rahmen eines Lernkurses bestehend aus mindesten einer Lerneinheit.

Der Rechner, auf dem ein derartiges Verfahren ausgeführt wird, ist in der Regel als ein Computer, insbesondere als ein Personal-Computer (PC) ausgebildet. Ein Verfahren der oben genannten Art wird auch als computergestütztes Lernen bzw. Computer-Based-Training (CBT) bezeichnet. CBT ist der Oberbegriff für interaktive Wissensvermittlung mittels eines Computers. Aus dem Stand der Technik ist ein CBT-Verfahren bekannt, das offline arbeitet und dem Lernenden die Lerneinheiten des Lernkurses von einem lokalen Speichermedium, bspw. einer CD-ROM, an einer Anzeigeeinheit des Computers zur Bearbeitung bereitstellt. Es sind aber auch CBT-Verfahren bekannt, die die Möglichkeiten moderner Rechnernetzwerke, bspw. eines firmeninternen Intranets oder des weltumspannenden Internets, zur Bereitstellung der Lerneinheiten des Lernkurses nutzen. Bei den CBT-Verfahren, die mit Rechnernetzwerken arbeiten, greift der Lernende mit seinem Computer über das Rechnernetzwerk auf einen bestimmten Rechner in dem Rechnernetzwerk, den sog. Server, zu. Auf dem Server sind die Lerneinheiten der Lernkurse, die Lernumgebung sowie Funktionen zur Verwaltung der Lernkurse abgelegt.

Bei den bekannten CBT-Verfahren wird zur Überwachung der Erreichung von Lernzielen in der Regel nach dem Abschluß einer Lerneinheit dem Lernenden ein Kontrolltest durch den Rechner bereitgestellt. Wann der Lernende diesen Kontrolltest dann durchführt, bleibt ihm üblicherweise selbst übelassen. Aus Bequemlichkeit wird der Lernende den Kontrolltest unmittelbar nach Beendigung der entsprechenden Lerneinheit durchführen, solange das Erlernte noch im Kurzzeitgedächtnis enthalten ist. Das Ergebnis eines solchen Kontrolltests ist wenig aussagekräftig über den tatsächlich erzielten Lernerfolg. Ein tatsächlicher Lernerfolg tritt nämlich erst dann ein, wenn der Lernende den Inhalt des Lernkurses verstanden hat und für längere Zeit behält. Das setzt voraus, daß der Inhalt des Lernkurses im Langzeitgedächtnis abgespeichert ist.

Durch die bekannten CBT-Verfahren wird der Lernprozess immer mehr in den Verantwortungsbereich des Lernenden verlagert. Dem Lernenden wird ein Höchstmaß an Eigeninitiative, Selbstdisziplin und Lernfähigkeit abverlangt. Es liegt an dem Lernenden, durch einen ausreichend großen zeitlichen Abstand zwischen dem Beenden einer Lerneinheit und der Bearbeitung des Kontrolltests für ein aussagekräftiges Ergebnis des Kontrolltests zu sorgen. Im Gegensatz zu einer Bearbeitung des Kontrolltests unmittelbar im Anschluß an eine Lerneinheit bedeutet dies jedoch einen erheblichen Mehraufwand für den Lernenden, da er den Inhalt der entsprechenden Lerneinheit tatsächlich verstanden haben und sich auch nach einem längeren Zeitraum noch daran erinnern muß.

Wenn sich aus dem Ergebnis des Kontrolltests ergibt, daß der Lernende Teile der Lerneinheit nicht oder falsch verstanden hat, gibt es verschiedene Möglichkeiten, wie die aus dem Stand der Technik bekannten CBT-Verfahren reagieren. Die erste Möglichkeit besteht darin, die Unzulänglichkeit zu ignorieren und den Lernkurs fortzusetzen. Dem Lernenden kann empfohlen werden, die entsprechende Lerneinheit doch noch einmal durchzuarbeiten. Dies ist die schlechteste denkbare Möglichkeit, da der Lernerfolg äußerst gering ist und die Lernziele voraussichtlich nicht erreicht werden. Eine andere Möglichkeit besteht darin, dem Lernenden eine zusätzliche Lerneinheit bereitzustellen, die das Thema der entsprechenden nicht oder falsch verstandenen Lerneinheit noch einmal wiederholt. Dabei handelt es sich in der Regel um fertige Lerneinheiten, die das Thema der entsprechenden Lerneinheit noch einmal zusammenfassend wiederholen. Die Effizienz solcher zusätzlichen Lerneinheiten ist recht gering, da sie nicht auf den individuellen Wissenstand des Lernenden angepaßt sind. Die zusätzlichen Lerneinheiten gehen entweder von einem zu großen Wissensdefizit des Lernenden aus, dann empfindet der Lernende sie als langweilig, oder aber sie gehen von einem zu hohen Wissensstand aus, dann ist der Lernende überfordert. In beiden Fällen wird er voraussichtlich die zusätzliche Lerneinheit nach kurzer Zeit abbrechen. Auch die Effizienz eines CBT-Verfahrens, das von der zweiten Möglichkeit Gebrauch macht, ist somit äußerst gering.

Eine Aufgabe der vorliegenden Erfindung besteht deshalb darin, ein Verfahren der eingangs genannten Art dahingehend auszugestalten und weiterzubilden, daß die Effizienz des Lernkurses erhöht wird.

Zur Lösung dieser Aufgabe schlägt die Erfindung ausgehend von dem Verfahren der eingangs genannten Art ein Verfahren vor, das durch die nachfolgenden Schritte gekennzeichnet ist:
- Auswahl von Fragen aus einer Gruppe von Fragen durch den Rechner, wobei die ausgewählten Fragen ein Lerngebiet betreffen, mit dem sich der Lernende im Rahmen des Lernkurses beschäftigt,
- Erstellung eines Kontrolltests durch Zusammenfügen der ausgewählten Fragen durch den Rechner,
- Bereitstellung des Kontrolltests an den Lernenden durch den Rechner,
- Aufnahme der Antworten des Lernenden auf die Fragen des Kontrolltests durch den Rechner,
- Vergleich der Antworten mit vorgegebenen Anforderungswerten durch den Rechner, und
- Erstellung einer zusätzlichen Lerneinheit durch den Rechner unter Berücksichtigung der Ergenisse des Vergleichs, falls die im Rahmen des Kontrolltests geforderten Anforderungswerte nicht erreicht sind, und
- Bereitstellung der zusätzlichen Lerneinheit für den Lernenden durch den Rechner.

Erfindungsgemäß ist erkannt worden, daß die Effizienz eines Lernkurses dadurch verbessert werden kann, daß dem Lernenden durch den Rechner ein Kontrolltest mit Fragen bereitgestellt wird und daß die Antworten des Lernenden auf diese Fragen herangezogen werden, um automatisch durch den Rechner eine individuell auf den Wissensstand des Lernenden abgestimmte zusätzliche Lerneinheit zu erstellen und dem Lernenden bereitzustellen. Während des Lernkurses wird die Erreichung von Lernzielen durch den Lernenden mittels des Rechners überwacht.

Im einzelnen werden im Rahmen des erfindungsgemäßen Verfahrens die nachfolgenden Schritte ausgeführt. Zunächst erstellt der Rechner automatisch aus einer Gruppe von Fragen einen Kontrolltest. Dazu wählt der Rechner vorzugsweise mittels eines Zufallsgenerators mehrere Fragen der Gruppe der Fragen aus und fügt die ausgewählten Fragen zu dem Kontrolltest zusammen. Die Gruppe der Fragen kann auf einer Datenbank abgelegt sein. Es versteht sich, daß die ausgewählten Fragen ein Lerngebiet betreffen, mit dem sich der Lernende im Rahmen des Lernkurses beschäftigt.

Der erstellte Kontrolltest wird dem Lernenden zur Bearbeitung bereitgestellt. Dies kann bspw. dadurch erfolgen, daß der Kontrolltest ausgedruckt und dem Lernenden in Papierform bereitgestellt wird. Es ist aber auch denkbar, dem Lernenden den Kontrolltest unmittelbar auf elektronischem Wege bereitzustellen, bspw. auf einer Anzeigeeinheit des Rechners.

Danach werden die Antworten des Lernenden auf die Fragen des Kontrolltests durch den Rechner aufgenommen. Dies kann bspw. dadurch erfolgen, daß die Antworten auf Papier gegeben werden und dann in den Rechner eingegeben werden. Es ist aber auch denkbar, daß der Lernende die Antworten unmittelbar auf elektronischem Wege in den Rechner eingibt, bspw. über eine Eingabeeinheit des Rechners.

Anschließend werden die Antworten auf die Fragen des Kontrolltests durch den Rechner mit vorgegebenen Anforderungswerten verglichen. Bei der Evaluierung der Antworten können unterschiedliche Merkmale (Zeit, erreichte Punktzahl, richtig/falsch) der Antworten berücksichtigt werden.

Schließlich wird durch den Rechner eine zusätzliche Lerneinheit erstellt und dem Lernenden bereitgestellt, falls die im Rahmen des Kontrolltests geforderten Anforderungswerte nicht erreicht sind. Bei der Erstellung der zusätzlichen Lerneinheit werden die Ergenisse des Vergleichs der Antworten auf die Fragen des Kontrolltests mit den Anforderungswerten berücksichtigt. Anhand der Ergebnisse des Vergleichs kann ermittelt werden, auf welchen Gebieten der Lernende noch Wissensdefizite hat. Eine derart erstellte zusätzliche Lerneinheit kann auf die individuellen Bedürfnisse eines jeden einzelnen Lernenden angepaßt werden. Eine solche zusätzliche Lerneinheit überfordert den Lernenden nicht, noch unterfordert sie ihn. Dadurch wird die Wahrscheinlichkeit, daß der Lernende die zusätzliche Lerneinheit bis zum Ende bearbeiten wird, erheblich erhöht. Durch das erfindungsgemäße Verfahren kann somit die Effizienz eines Lernkurses entscheidend verbessert werden.

Es ist denkbar, daß das erfindungsgemäße Verfahren einige Zeit nach Abschluß der zusätzlichen Lerneinheit erneut aufgerufen wird, um zu überprüfen, ob der Lernende den Inhalt der zustätzlichen Lerneinheit verstanden und behalten hat. Das erfindungsgemäße Verfahren kann so lange aufgerufen werden, bis der Lernende den gesamten Inhalt einer Lerneinheit tatsächlich verstanden und behalten hat.

Gemäß einer vorteilhaften Weiterbildung der vorliegenden Erfindung wird vorgeschlagen, daß die Richtigkeit der Antworten auf die Fragen des Kontrolltests als erste Werte und die Zeitdauer, die der Lernende zur Beantwortung der Fragen benötigt, als zweite Werte jeweils durch den Rechner aufgenommen werden und daß die ersten Werte und die zweiten Werte durch den Rechner mit vorgegebenen Anforderungswerten verglichen werden. Dies sind die entscheidenden Werte für die Evaluierung der Antworten des Lernenden auf die Fragen des Kontrolltests. Anhand dieser Werte kann eine ausreichend genaue und aussagekräftige Evaluierung der Antworten durchgeführt werden.

Eine bevorzugte Ausführungsform des Verfahrens schlägt vor, daß von dem Rechner eine Nachricht an den Lernenden übermittelt wird, den Kontrolltest durchzuführen. Diese Nachricht kann zu einem beliebigen Zeitpunkt während der Bearbeitung des Lernkurses erscheinen. Ebenso kann das erfindungsgemäße Verfahren zu einem beliebigen Zeitpunkt während der Bearbeitung des Lernkurses durch den Rechner aufgerufen werden. Es ist bspw. denkbar, den Kontrolltest bzgl. einer bestimmten Lerneinheit erst einige Lerneinheiten später aufzurufen, um auf diese Weise das Langzeitgedächtnis des Lernenden zu testen. Es ist auch denkbar, die Fragen zu mehreren Lernkursen zu einem einzigen Kontrolltest zusammenzufügen. Dadurch kann überprüft werden, ob der Lernende den Inhalt der bereits bearbeiteten Lerneinheiten auch in neuen Umgebungen einsetzen und das Erlernte auch umsetzen kann.

Vorteilhafterweise wird die Nachricht in Abhängigkeit von vorgegebenen Bedingungen an den Lernenden übermittelt. Die vorgegebenen Bedingungen sind bspw. didaktische oder pädagogische Bedingungen. Eine solche Bedingung kann bspw. darin bestehen, die Nachricht frühestens zwei Tage nach Abschluß einer bestimmten Lerneinheit, auf die sich der Kontrolltest bezieht, an den Lernenden zu senden.

Gemäß einer vorteilhaften Weiterbildung der Erfindung wird das Verfahren im Rahmen des Lernkurses in bestimmten zeitlichen Abständen automatisch durchgeführt. Es ist auch denkbar, das Verfahren in bestimmten didaktischen Abständen, d. h. nachdem eine bestimmte Anzahl von Lerneinheiten bearbeitet worden sind, automatisch durchzuführen. Dadurch kann sichergestellt werden, daß der Inhalt des Lernkurses von dem Lernenden auch wirklich verstanden und behalten worden ist.

Vorteilhafterweise werden die Fragen des Kontrolltests mittels Electronic-Mail (E-Mail) über ein Rechnernetzwerk dem Lernenden übermittelt. Die Antworten des Lernenden auf die Fragen des Kontrolltests werden ebenfalls vorzugsweise mittels Electronic-Mail (E-Mail) über ein Rechnernetzwerk an den das Verfahren durchführenden Rechner übermittelt.

Alternativ oder zusätzlich wird vorgeschlagen, daß die Fragen des Kontrolltests auf einer Web-Seite in einem Rechnernetzwerk bereitgestellt werden, auf die der Lernende Zugriff hat. Die Antworten des Lernenden auf die Fragen des Kontrolltests werden vorzugsweise auf einer Web-Seite eingegeben und aus der Web-Seite über ein Rechnernetzwerk an den das Verfahren durchführenden Rechner übermittelt.

Um den Lernenden zu motivieren, werden die Ergebnisse des Vergleichs der ersten Werte und der zweiten Werte mit den vorgegebenen Anforderungswerten auf einer Web-Seite bereitgestellt. Auf die Web-Seite haben alle Teilnehmer eines Lernkurses Zugriff. Dadurch wird ein wichtiger Motivationsfaktor aus dem Bereich des Classroom-Teachings, nämlich das Konkurrenzdenken unter mehreren Teilnehmern eines Lernkurses, erstmals auf ein CBT-Verfahren übertragen. Dadurch kann die Effizienz eines Lernkurses weiter verbessert werden.

Von besonderer Bedeutung ist die Realisierung des erfindungsgemäßen Verfahrens in der Form eines Steuerelements für einen Rechner. Dabei ist auf dem Steuerelement ein Programm abgespeichert, das auf dem Rechner ablauffähig und zur Ausführung des erfindungsgemäßen Verfahrens geeignet ist. In diesem Fall wird also die Erfindung durch ein auf dem Steuerelement abgespeichertes Programm realisiert, so daß dieses mit dem Programm versehene Steuerelement in gleicher Weise die Erfindung darstellt wie das Verfahren, zu dessen Ausführung das Programm geeignet ist. Als Steuerelement kann insbesondere ein elektrisches Speichermedium zur Anwendung kommen, bspw. eine Compact Disc (CD), eine Diskette oder dergleichen.

Eine andere Aufgabe der vorliegenden Erfindung besteht darin, einen Rechner der eingangs genannten Art dahingehend auszugestalten und weiterzubilden, daß die Effizienz des Lernkurses erhöht wird.

Zur Lösung dieser Aufgabe schlägt die Erfindung ausgehend von dem Rechner der eingangs genannten Art einen Rechner vor, der aufweist:
- Mittel zur Auswahl von Fragen aus einer Gruppe von Fragen, wobei die Fragen ein Lerngebiet betreffen, mit dem sich der Lernende im Rahmen des Lernkurses beschäftigt,
- Mittel zum Erstellen eines Kontrolltests durch Zusammenfügen der ausgewählten Fragen,
- Mittel zur Bereitstellung des Kontrolltests an den Lernenden,
- Mittel zur Aufnahme der Antworten des Lernenden auf die Fragen des Kontrolltests,
- Mittel zum Vergleich der Antworten mit vorgegebenen Anforderungswerten,
- Mittel zur Erstellung einer zusätzlichen Lerneinheit anhand der Ergebnisse des Vergleichs, falls die im Rahmen des Kontrolltests geforderten Anforderungswerte nicht erreicht sind, und
- Mittel zur Bereitstellung der zusätzlichen Lerneinheit für den Lernenden.

Die Mittel zur Auswahl der Fragen aus der Gruppe von Fragen weisen vorzugsweise einen Zufallsgenerator auf.

Gemäß einer vorteilhaften Weiterbildung der Erfindung wird vorgeschlagen, daß der Rechner aufweist:
- Mittel zur Aufnahme der Richtigkeit der Antworten auf die Fragen des Kontrolltests als erste Werte und der Zeitdauer, die der Lernende zur Beantwortung der Fragen benötigt, als zweite Werte, und
- Mittel zum Vergleich der ersten Werte und der zweiten Werte mit vorgegebenen Anforderungswerten.

Vorteilhafterweise weist der Rechner Mittel zur Übermittlung einer Nachricht an den Lernenden auf, den Kontrolltest durchzuführen. Vorzugsweise sind diese Mittel als Mittel zur Übermittlung der Nachricht in Abhängigkeit von vorgegebenen Bedingungen ausgebildet.

Gemäß einer bevorzugten Ausführungsform wird vorgeschlagen, daß der Rechner eine Datenbank aufweist, auf der die Gruppe der Fragen abgelegt ist.

Der Rechner ist vorteilhafterweise in ein Rechnernetzwerk eingebunden. Das Rechnernetzwerk ist vorzugsweise als ein firmeninternes Intranet ausgebildet. Alternativ wird vorgeschlagen, daß das Rechnernetzwerk als ein weltumspannendes Rechnernetzwerk, insbesondere als das Internet, ausgebildet ist.

Eine bevorzugte Ausführungsform der vorliegenden Erfindung wird im folgenden anhand der Zeichnung näher erläutert. Es zeigt:

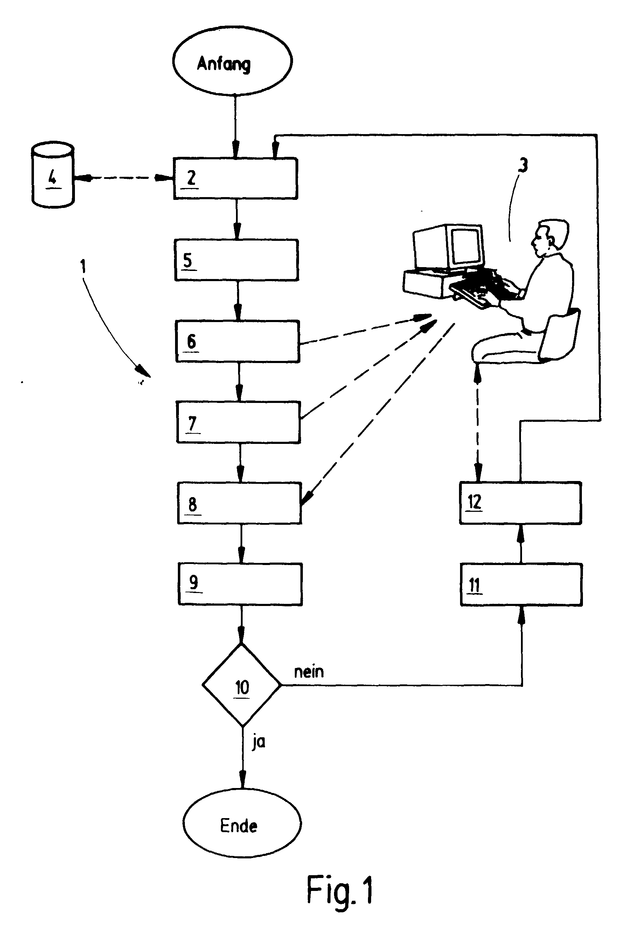

- Fig. 1: ein Ablaufdiagramm des erfindungsgemäßen Verfahrens.

In Fig. 1 ist das erfindungsgemäße Verfahren in seiner Gesamtheit mit dem Bezugszeichen 1 gekennzeichnet. Das Verfahren 1 dient zur automatischen Überwachung der Erreichung von Lernzielen durch einen Lernenden 3 im Rahmen eines Lernkurses mittels eines Rechners. Der Lernkurs besteht aus mehreren Lerneinheiten. Zu Beginn des Verfahrens 1 werden in einem Schritt 2 Fragen aus einer Gruppe von Fragen mittels eines Zufallsgenerators des Rechners ausgewählt. Die Gruppe der Fragen ist in einer Datenbank 4 abgelegt. Die ausgewählten Fragen betreffen ein Lerngebiet, mit dem sich der Lernende 3 im Rahmen des Lernkurses beschäftigt.

In einem nachfolgenden Schritt 5 wird ein Kontrolltest erstellt. Dazu werden die ausgewählten Fragen durch den Rechner zusammengefügt.

In einem weiteren Schritt 6 wird dem Lernenden 3 eine Nachricht übermittelt, den Kontrolltest durchzuführen. Der gestrichelte Pfeil zwischen dem Schritt 6 und dem Lernenden 3 deutet an, daß an dieser Stelle eine Kommunikation zwischen dem Rechner und dem Lernenden 3 erfolgt.

In einem nachfolgenden Schritt 7 wird der Kontrolltest dem Lernenden 3 bereitgestellt. Die Fragen des Kontrolltests werden bspw. auf der Anzeigeeinheit des Rechners dargestellt. Der Lernende 3 beantwortet die Fragen des Kontrolltests in einem weiteren Schritt 8 des Verfahrens 1. Die gestrichelten Pfeile zwischen den Schritten 7 und 8 und dem Lernenden 3 deuten wiederum eine Kommunikation zwischen dem Rechner und dem Lernenden 3 in den gekennzeichneten Richtungen an.

In einem nachfolgenden Schritt 9 werden die Antworten des Lernenden 3 auf die Fragen des Kontrolltests mit bestimmten Anforderungswerten verglichen. Dabei wird vorzugsweise die Richtigkeit der Antworten auf die Fragen als erste Werte und die Zeitdauer, die der Lernende zur Beantwortung der Fragen benötigt, als zweite Werte jeweils durch den Rechner aufgenommen. Diese ersten und zweiten Werte werden dann in dem Schritt 9 mit den vorgegebenen Anforderungswerten für diese Werte verglichen.

In einer anschießenden Abfrage 10 wird überprüft, ob die im Rahmen des Kontrolltests geforderten Anforderungen erreicht wurden, d. h. ob der Kontrolltest bestanden wurde. Falls dies der Fall ist (ja), kann das erfindungsgemäße Verfahren 1 an dieser Stelle beendet werden.

Wurde der Kontrolltest jedoch nicht bestanden (nein), wird gemäß der vorliegenden Erfindung in einem weiteren Schritt 11 eine zusätzliche Lerneinheit durch den Rechner erstellt. Dabei werden die Ergebnisse des Vergleichs von Schritt 9 berücksichtigt. Aus den Ergebnissen des Vergleichs kann auf die Wissensdefizite des Lernenden 3 geschlossen werden. Die in Schritt 11 erzeugte zusätzliche Lerneinheit kann also auf den Wissensstand des Lernenden 3 individuell angepaßt werden.

Diese zusätzliche Lerneinheit wird dem Lernenden 3 in einem anschließenden Schritt 12 zur Bearbeitung bereitgestellt. Die zusätzliche Lerneinheit kann dem Lernenden bspw. auf der Anzeigeeinheit des Rechners bereitgestellt werden. Der gestrichelte Doppelpfeil zwischen dem Schritt 12 und dem Lernenden 3 deutet dabei eine Interaktion zwischen dem Lernenden und dem Rechner an.

Danach kann zu einem beliebigen Zeitpunkt wiederum das erfindungsgemäße Verfahren 1 durchlaufen werden, um zu überprüfen, ob der Lernende 3 den Inhalt der zusätzlichen Lerneinheit verstanden und behalten hat und ob er nunmehr die gesamte übergeordnete Lerneinheit des Lernkurses verstanden und behalten hat. Das erfindungsgemäße Verfahren 1 kann so lange durchlaufen werden, bis der Lernende 3 den Kontrolltest bestanden hat.

Die Übermittlung der Nachricht, den Kontrolltest durchzuführen, (Schritt 6) kann über electronic-mail (E-Mail erfolgen. Der Kontrolltest und die zusätzliche Lerneinheit können dem Lernenden 3 über eine Web-Seite bereitgestellt werden, auf die der Lernende 3 Zugriff hat.

## Patentansprüche

1. Verfahren (1) zur automatischen Überwachung der Erreichung von Lernzielen durch einen Lernenden (3) im Rahmen eines Lernkurses bestehend aus mindestens einer Lerneinheit mittels eines Rechners, **gekennzeichnet durch** die nachfolgenden Schritte:
- Auswahl von Fragen aus einer Gruppe von Fragen durch den Rechner (2), wobei die ausgewählten Fragen ein Lerngebiet betreffen, mit dem sich der Lernende (3) im Rahmen des Lernkurses beschäftigt,
- Erstellung eines Kontrolltests durch Zusammenfügen der ausgewählten Fragen durch den Rechner (5),
- Bereitstellung des Kontrolltests an den Lernenden (3) durch den Rechner (7),
- Aufnahme der Antworten des Lernenden (3) auf die Fragen des Kontrolltests durch den Rechner (8),
- Vergleich der Antworten mit vorgegebenen Anforderungswerten durch den Rechner (9),
- Erstellung einer zusätzlichen Lerneinheit durch den Rechner unter Berücksichtigung der Ergebnisse des Vergleichs (11), falls die im Rahmen des Kontrolltests geforderten Anforderungswerte nicht erreicht sind, und
- Bereitstellung der zusätzlichen Lerneinheit für den Lernenden (3) durch den Rechner (12).

2. Verfahren (1) nach Anspruch 1, dadurch gekennzeichnet, daß die Fragen aus der Gruppe von Fragen durch einen Zufallsgenerator des Rechners (2) ausgewählt werden.

3. Verfahren (1) nach Anspruch 1 oder 2, dadurch gekennzeichnet, daß die Richtigkeit der Antworten auf die Fragen des Kontrolltests als erste Werte und die Zeitdauer, die der Lernende (3) zur Beantwortung der Fragen benötigt, als zweite Werte jeweils durch den Rechner aufgenommen werden und daß die ersten Werte und die zweiten Werte durch den Rechner mit vorgegebenen Anforderungswerten verglichen werden.

4. Verfahren (1) nach einem der Ansprüche 1 bis 3, dadurch gekennzeichnet, daß von dem Rechner eine Nachricht an den Lernenden (3) übermittelt wird, den Kontrolltest durchzuführen (6).

5. Verfahren (1) nach Anspruch 4, dadurch gekennzeichnet, daß die Nachricht in Abhängigkeit von vorgegebenen Bedingungen an den Lernenden (3) übermittelt wird.

6. Verfahren (1) nach einem der Ansprüche 1 bis 5, dadurch gekennzeichnet, daß das Verfahren (1) im Rahmen des Lernkurses in bestimmten zeitlichen Abständen automatisch durchgeführt wird.

7. Verfahren (1) nach einem der Ansprüche 1 bis 6, dadurch gekennzeichnet, daß die Fragen des Kontrolltests mittels Electronic-Mail (E-Mail) über ein Rechnernetzwerk dem Lernenden (3) übermittelt werden.

8. Verfahren (1) nach einem der Ansprüche 1 bis 7, dadurch gekennzeichnet, daß die Antworten des Lernenden (3) auf die Fragen des Kontrolltests mittels Electronic-Mail (E-Mail) über ein Rechnernetzwerk an den das Verfahren (1) durchführenden Rechner übermittelt werden.

9. Verfahren (1) nach einem der Ansprüche 1 bis 8, dadurch gekennzeichnet, daß die Fragen des Kontrolltests auf einer Web-Seite in einem Rechnernetzwerk bereitgestellt werden, auf die der Lernende (3) Zugriff hat.

10. Verfahren (1) nach einem der Ansprüche 1 bis 9, dadurch gekennzeichnet, daß die Antworten des Lernenden (3) auf die Fragen des Kontrolltests auf einer Web-Seite eingegeben werden und daß die Antworten aus der Web-Seite über ein Rechnernetzwerk an den das Verfahren (1) durchführenden Rechner übermittelt werden.

11. Verfahren (1) nach einem der Ansprüche 1 bis 10, dadurch gekennzeichnet, daß die Ergebnisse des Vergleichs der ersten Werte und der zweiten Werte mit den vorgegebenen Anforderungswerten auf einer Web-Seite bereitgestellt werden.

12. Steuerelement, insbesondere Compact Disc (CD), Diskette oder dergleichen, für einen Rechner, auf dem ein Programm abgespeichert ist, das auf dem Rechner ablauffähig und zur Ausführung eines Verfahrens nach einem der Ansprüche 1 bis 11 geeignet ist.

13. Rechner zur automatischen Überwachung der Erreichung von Lernzielen durch einen Lernenden (3) im Rahmen eines Lernkurses bestehend aus mindesten einer Lerneinheit,
**dadurch gekennzeichnet**, daß der Rechner aufweist:
- Mittel zur Auswahl von Fragen aus einer Gruppe von Fragen, wobei die Fragen ein Lerngebiet betreffen, mit dem sich der Lernende (3) im Rahmen des Lernkurses beschäftigt,
- Mittel zum Erstellen eines Kontrolltests durch Zusammenfügen der ausgewählten Fragen,
- Mittel zur Bereitstellung des Kontrolltests an den Lernenden (3),
- Mittel zur Aufnahme der Antworten des Lernenden (3) auf die Fragen des Kontrolltests,
- Mittel zum Vergleich der Antworten mit vorgegebenen Anforderungswerten, und
- Mittel zur Erstellung einer zusätzlichen Lerneinheit anhand der Ergebnisse des Vergleichs, falls die im Rahmen des Kontrolltests geforderten Anforderungswerte nicht erreicht sind, und
- Mittel zur Bereitstellung der zusätzlichen Lerneinheit für den Lernenden (3).

14. Rechner nach Anspruch 13, dadurch gekennzeichnet, daß die Mittel zur Auswahl der Fragen aus der Gruppe von Fragen einen Zufallsgenerator aufweisen.

15. Rechner nach Anspruch 13 oder 14, dadurch gekennzeichnet, daß der Rechner aufweist:
- Mittel zur Aufnahme der Richtigkeit der Antworten auf die Fragen des Kontrolltests als erste Werte und der Zeitdauer, die der Lernende (3) zur Beantwortung der Fragen benötigt, als zweite Werte, und
- Mittel zum Vergleich der ersten Werte und der zweiten Werte mit vorgegebenen Anforderungswerten.

16. Rechner nach einem der Ansprüche 13 bis 15, dadurch gekennzeichnet, daß der Rechner Mittel zur Übermittlung einer Nachricht an den Lernenden (3) aufweist, den Kontrolltest durchzuführen.

17. Rechner nach Anspruch 16, dadurch gekennzeichnet, daß der Rechner Mittel zur Übermittlung der Nachricht in Abhängigkeit von vorgegebenen Bedingungen aufweist.

18. Rechner nach einem der Ansprüche 13 bis 17, dadurch gekennzeichnet, daß der Rechner eine Datenbank aufweist, auf der die Gruppe der Fragen abgelegt ist.

19. Rechner nach einem der Ansprüche 13 bis 18, dadurch gekennzeichnet, daß der Rechner in ein Rechnernetzwerk eingebunden ist.

20. Rechner nach Anspruch 19, dadurch gekennzeichnet, daß das Rechnernetzwerk als ein firmeninternes Intranet ausgebildet ist.

21. Rechner nach Anspruch 19, dadurch gekennzeichnet, daß das Rechnernetzwerk als ein weltumspannendes Rechnernetzwerk, insbesondere als das- Internet, ausgebildet ist.
